# FASCICULE DE BREVET EUROPEEN

(11) **EP 2 528 723 B1**
(45) Date de publication et mention de la délivrance du brevet: **04.03.2015**
(21) Numéro de dépôt: 11705009.6
(22) Date de dépôt: 07.01.2011
(51) Int. Cl.: B29C 47/02, B29C 47/10, B29C 47/20, E04C 3/28

(54) **OUTILLAGE D'EXTRUSION POUR LA FABRICATION DE PROFILES EN MATIERE PLASTIQUE ET PROCEDE DE MISE EN OEUVRE**
EXTRUSIONSVORRICHTUNG ZUR HERSTELLUNG VON KUNSTSTOFFPROFILELEMENTEN UND IMPLEMENTIERUNGSVERFAHREN
EXTRUSION EQUIPMENT FOR MANUFACTURING PLASTIC PROFILE MEMBERS AND IMPLEMENTATION METHOD

(30) Priorité: 27.01.2010 FR 1000299
(43) Date de publication de la demande: 05.12.2012
(73) Titulaire: Alphacan, 81600 Gaillac (FR)
(72) Inventeur: BEAUPERE, Didier, F-85640 Mouchamps (FR); TOURTE, Marc, F-81990 Le Sequestre (FR); ONDARTS, Jean, F-64240 Hasparren (FR)
(74) Mandataire: Balmefrezol, Ludovic Francis Pierre
(86) Numéro de dépôt international: PCT/FR2011/050027
(87) Numéro de publication internationale: WO 2011/092409

(56) Documents cités:
- EP-A2- 0 720 904
- FR-A1- 2 579 926
- US-A- 4 277 432
- US-A1- 2005 108 983

## Description

L'invention est relative à un outillage d'extrusion pour la fabrication de profilés en matière plastique avec éléments de renforcement en une matière à haute résistance mécanique, notamment fibres de verre ou fibres de carbone ou autre fibre organique ou minérale, comprenant une filière avec un bloc d'entrée pour l'injection de la matière plastique, sous haute pression, dans des passages traversant des blocs successifs pour donner progressivement sa forme au profilé jusqu'à une ouverture de sortie au profil final, et un poinçon maintenu par des ailettes à l'intérieur des passages pour la matière plastique.

L'invention a pour but, surtout, d'augmenter la rigidité du profilé tout en évitant un renforcement par des profilés métalliques créant des ponts thermiques, en particulier en menuiserie. L'invention vise également à assurer une diminution de la dilatation ou de la rétractation des profilés due à la température ambiante ou superficielle, notamment liée au rayonnement solaire. Cette invention s'applique à différents profilés thermoplastiques, colorés ou non, utilisés entre autres dans les domaines de la menuiserie, plus précisément des fenêtres et portes, de la fermeture, du bardage, de la clôture, ou autres. Les profilés thermoplastiques colorés sont obtenus essentiellement par plaxage de film, laquage, coextrusion de matières thermoplastiques ou tout autres procédés de décoration pouvant être appliqué en ligne ou en reprise.

Il a déjà été proposé de charger en fibres de verre un profilé en matériau thermoplastique, par co-extrusion au coeur. Il s'agit de fibres courtes et les propriétés mécaniques du profilé demandent à être encore améliorées.

On connaît le document FR 2579926 qui concerne un outillage d'extrusion pour la fabrication de profilés en matière plastique avec éléments de renforcement, comprenant une tête de filière et une filière proprement dite, avec un porte-poinçon et un poinçon dans l'axe de la tête de filière. Des canaux et des guides sont prévus pour acheminer un élément renforçateur. Les canaux et guides sont séparés, sur la majeure partie de leur trajet, des passages pour la matière plastique. Par ailleurs, les guides ne débouchent pas dans le passage de matière plastique que dans une zone proche de la sortie formée par une cavité d'extrusion.

On connaît également le document EP 0720904 qui décrit un outillage et un procédé de renforcement d'extrusipn pour la fabrication de profilés en matière plastique avec éléments de renforcement. Selon la figure 1 de ce document, des conduits b angle droit guident les éléments de renforcement, en s'arrêtant à une extrémité située à distance de l'ouverture d'extrusion. Ces conduits, à l'instar de ceux du document FR 2579926, viennent interférer dans le passage de la matière plastique. Selon la figure 3 de ce même document, le conduit pour les éléments de renforcement s'arrête à distance de la sortie de sorte que la pression de matière extrudée, au niveau du débouché des conduits, est nécessairement élevée. En l'absence d'éléments de renforcement, la matière plastique peut donc refluer dans les conduits. Enfin, dans ce document, il est prévu de produire des profilés avec des canaux où l'on peut insérer ultérieurement des armatures qui peuvent être mises sous précontrainte.

Selon l'invention, un outillage d'extrusion pour la fabricaition de profilés en matière plastique, avec éléments de renforcement, du genre défini précédemment, c'est-à-dire un outillage d'extrusion pour la fabrication de profilés en matière plastique avec éléments de renforcement en une matière haute résistance mécanique, notamment fibres de verre ou fibres de carbone, comprend une filière avec un bloc d'entrée pour l'injection de la matière plastique, sous haute pression, dans des passages traversant des blocs successifs pour donner progressivement sa forme au profilé jusqu'à une ouverture de sortie au profil final, et un poinçon maintenu par des ailettes à l'intérieur des passages pour la matière plastique, comportant des canaux (C1-C4) pour l'insertion de joncs continus de renfort (J1-J4) constituant les éléments de renfort, alors que :
- la transition des canaux (C1-C4) de l'extérieur à l'intérieur du contour du profilé est réalisée sans intersection avec les passages pour la matière plastique grâce à des décalages de plans,
- et ces canaux sont séparés, sur au moins la majeure partie de leur trajet dans la filière, des passages pour la matière plastique, et ne débouchent dans ces passages que dans une zone proche de la sortie où la pression de la matière plastique injectée est devenue suffisamment faible pour, qu'en l'absence de joncs, la matière plastique ne s'infiltre pas dans les canaux, de sorte que cet outillage d'extrusion permet de passer d'une fabrication sans joncs de renfort à une fabrication avec joncs de renfort, et inversement, sans interruption.

Selon un mode préféré de l'invention, les canaux (C1-C4) sont séparés des passages pour la matière plastique sur toute la partie de leur trajet dans la filière.

La transition des canaux de l'extérieur à l'intérieur du contour permet d'éviter d'interférer dans l'écoulement de matière plastique par la présence d'un obstacle.

Les joncs de renfort sont avantageusement constitués de fibres en une matière à haute résistance mécanique, en particulier fibres de verre et/ou de carbone, maintenues dans une matrice.

L'invention consiste ainsi à insérer en ligne et en continu des joncs de fibres, organiques ou minérales, pendant l'opération d'extrusion du profilé en matière plastique, notamment en matière thermoplastique.

Le ou les joncs de fibres, mono- ou multi filaments, traversent tout ou partie de la filière d'extrusion pour en ressortir enrobés par la matière plastique. La liaison entre le jonc et la matière plastique est principalement physique, induite par le retrait de la matière plastique et la rugosité du jonc. Une liaison chimique pourrait intervenir en prévoyant une matrice du jonc de renfort chimiquement compatible avec la matière plastique du profilé, notamment avec le polychlorure de vinyle (PVC).

Avantageusement, les ouvertures d'entrée des canaux d'insertion de joncs continus de renfort sont situées sur la face arrière de l'outillage ou sur les côtés.

Les ouvertures d'entrée des canaux d'insertion peuvent être situées radialement à l'extérieur de l'orifice d'entrée de la matière plastique, et les canaux d'insertion comportent une partie arrière inclinée vers l'axe géométrique de la tête pour passer radialement à l'intérieur du contour du profilé sans intersection avec les passages pour la matière plastique.

De préférence, les canaux d'insertion débouchent dans une zone proche de la sortie formée par un élargissement radial vers l'intérieur des passages pour la matière plastique. Cette zone peut être située à une distance (h) de la sortie présentant le moins de pression exercée sur la matière extrudée afin d'éviter le retour de matière dans les canaux.

Les canaux d'insertion dans leur partie avant peuvent être sensiblement rectilignes et parallèles à l'axe géométrique de l'outillage d'extrusion.

Dans le cas d'un profilé à contour polygonal, les canaux d'insertion débouchent à l'intérieur du contour polygonal.

L'invention est également relative à un procédé de fabrication de profilés en matière plastique avec éléments de renforcement en une matière à haute résistance mécanique, notamment en fibres de verre ou fibres de carbone, mettant en oeuvre un outillage d'extrusion tel que défini précédemment, qui est caractérisé en ce que :
- le début de fabrication est effectué sans insérer les joncs continus constituant les éléments de renforcement,
- et l'insertion des joncs est réalisée lorsqu'un régime de sortie du profilé s'est établi.

Avantageusement, en cours de fabrication, l'insertion de joncs de renfort peut être arrêtée, pour produire un profilé sans éléments de renforcement, puis reprise, sans interruption de l'extrusion de la matière plastique.

Selon une possibilité offerte par l'invention, préalablement à l'insertion des joncs (C1-C4), on réalise un chauffage desdits joncs (C1-C4) à une température T₀ comprise entre 220°C et 350°C, de préférence à une température T₀ comprise entre 250°C et 290°C. En outre, avantageusement, le chauffage des joncs (C1-C4) est réalisé sans contact, de préférence par passage desdits joncs (C1-C4) à proximité d'au moins une résistance, par exemple de type infra-rouge, présentant une longueur comprise entre 300 et 500 millimètres (mm), idéalement comprise entre 380 et 420 mm.

En effet, la demanderesse a constaté que le chauffage des joncs de renfort préalablement à leurs entrées dans la filière permet d'augmenter la cohésion de ces derniers avec la matière plastique, typiquement le PVC. La demanderesse a constaté après expérimentations un gain important (de l'ordre de 30%) en retrait des joncs de renfort lors de leur assemblage/disposition dans la matrice plastique. Par ailleurs, grâce à ce chauffage sans contact (à la différence d'un chauffage par conduction par exemple), la surface des joncs de renfort n'est pas modifiée et les canaux de passage du jonc dans la filière ne sont pas encrassés par dépôt du polymère d'enrobage des joncs de renfort.

On notera que le chauffage de ces joncs de renfort est réalisé en ligne par rapport à la filière, idéalement à une distance comprise entre 200 et 300 millimètres (mm) avant l'entrée desdits joncs dans l'outillage d'extrusion.

L'invention consiste, mises à part les dispositions exposées ci-dessus, en un certain nombre d'autres dispositions dont il sera plus explicitement question ci-après à propos d'exemples de réalisation décrits avec références aux dessins annexés, mais qui ne sont nullement limitatifs. Sur ces dessins :
La figure 1 est une coupe transversale schématique d'un profilé selon l'invention, en matière plastique, de section carrée.
La figure 2 est une coupe schématique d'un autre profilé selon l'invention pour châssis de fenêtre.
La figure 3 est une vue en perspective, depuis l'avant gauche, d'un outillage d'extrusion selon l'invention, agencé sous forme de tête d'extrusion.
La figure 4 est une coupe horizontale de la tête d'extrusion de la figure 3 au niveau de deux canaux d'insertion de joncs de renfort.
La figure 5 est un détail à plus grande échelle de la zone V de la figure 4.
La figure 6 est une vue en perspective, depuis l'avant gauche, d'une partie de la tête d'extrusion coupée par un plan vertical au voisinage de deux sorties de canaux d'insertion de joncs.
La figure 7 est une vue en perspective de l'arrière de la tête d'extrusion et
La figure 8 est une vue en perspective, à plus grande échelle, de l'extrémité avant de la tête d'extrusion dont le bloc de sortie a été retiré pour faire apparaître l'extrémité du poinçon.
Les figures 9 et 10 sont des coupes transversales de la tête d'extrusion représentée sur le figure 4 sur lesquelles sont visibles les différents tronçons des passages des joncs de renfort et de la matière plastique les uns par rapport aux autres.
Les figures 11 et 12 sont des vues en coupe schématique permettant d'illustrer en particulier la courbure des tronçons des passages des joncs de renfort par rapport au tronçons de passage de la matrice plastique.

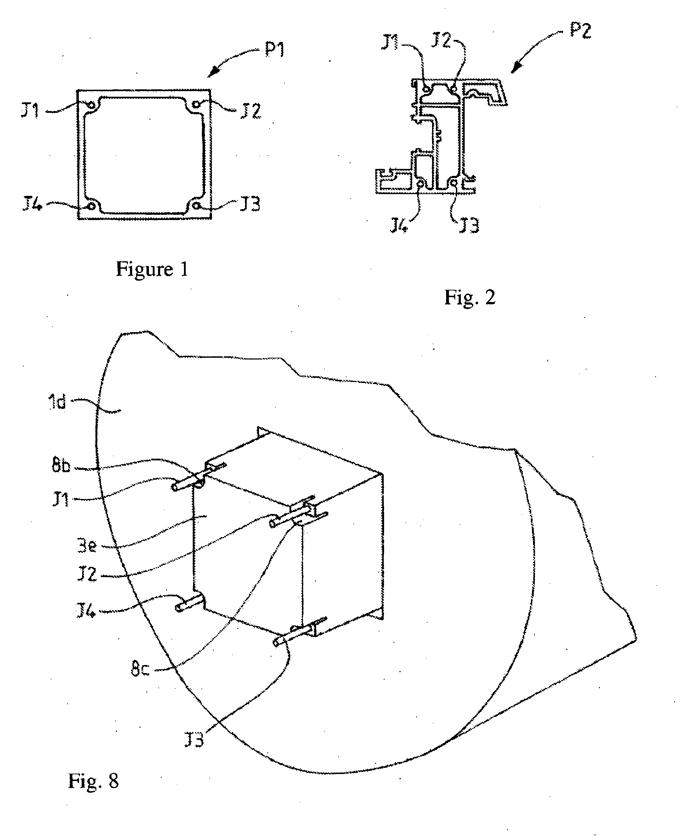

En se reportant aux dessins on peut voir, sur la figure 1, la section d'un profilé en matière plastique P1 selon l'invention, de forme carrée ou rectangulaire, qui comporte à l'intérieur de ses angles de contour des joncs continus de renfort J1, J2, J3, J4 insérés dans la matière plastique et entourés par cette dernière. Les joncs de renfort sont avantageusement constitués de fibres à haute résistance mécanique, notamment fibres de verre et/ou fibres de carbone.

La figure 2 montre, en section transversale, un autre profilé P2 en matière plastique conforme à l'invention pour châssis de fenêtre dont le contour polygonal est bien visible. Les joncs de renfort J1-J4 sont prévus également à l'intérieur de quatre angles du contour polygonal.

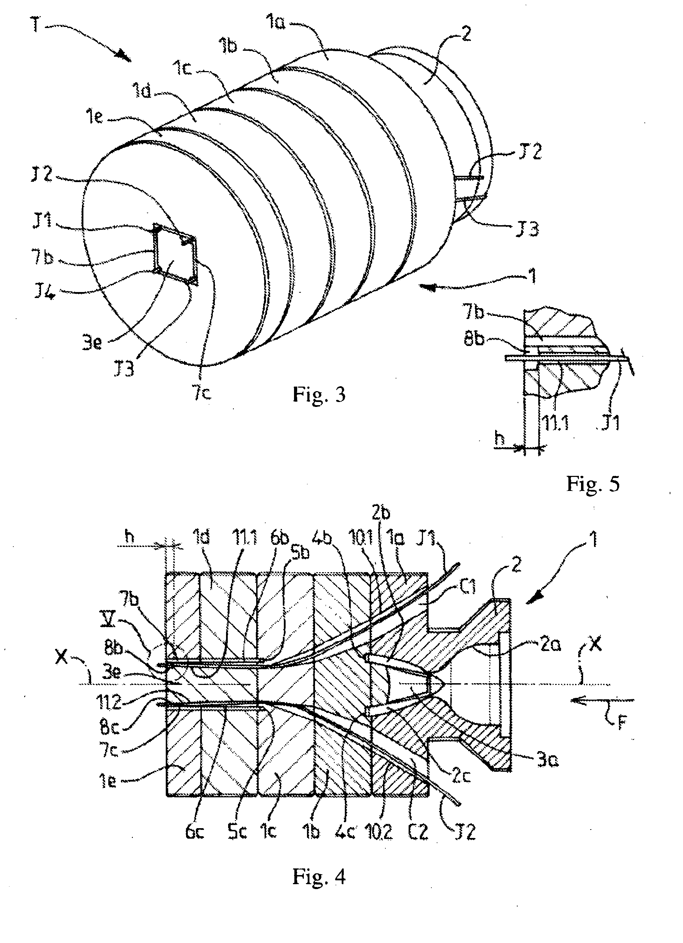

Les profilés P1 ou P2 sont obtenus par injection de matière plastique dans un outillage d'extrusion constitué par une tête d'extrusion T illustrée sur la figure 3, et dont la sortie correspond plus particulièrement au profilé de la figure 1.

La tête T comprend une filière 1 constituée de plusieurs blocs empilés, démontables, 1 a, 1 b, 1 c, 1 d, 1 e de l'arrière vers l'avant, suivant le sens de progression de la matière plastique injectée. Le bloc arrière 1 a constitue le bloc d'entrée pour l'injection de la matière plastique sous haute pression, suivant la direction axiale de la tête comme il apparaît sur les figures 4, 9 et 10 d'après la flèche F. Ce bloc 1 a comporte, à l'arrière, une partie 2 tronconique, coaxiale à la tête, prévue pour être raccordée de manière étanche à une extrudeuse. La partie 2 comporte, dans sa zone centrale, une entrée 2a, en forme de cuvette sensiblement hémisphérique, qui se raccorde, vers son fond, à des passages 2b, 2c pour la matière plastique. Ces passages sont séparés par un poinçon 3, en forme d'ogive dont la pointe est tournée vers l'arrière. Le poinçon 3 est maintenu, dans la filière, par des ailettes radiales traversant les passages 2b, 2c, ailettes autour desquelles s'écoule la matière plastique.

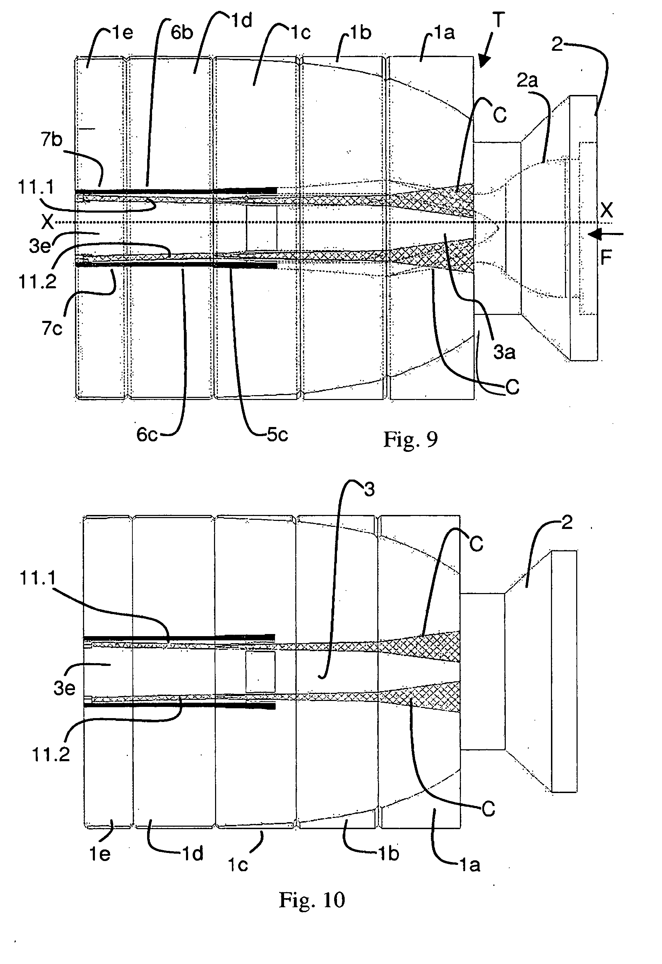

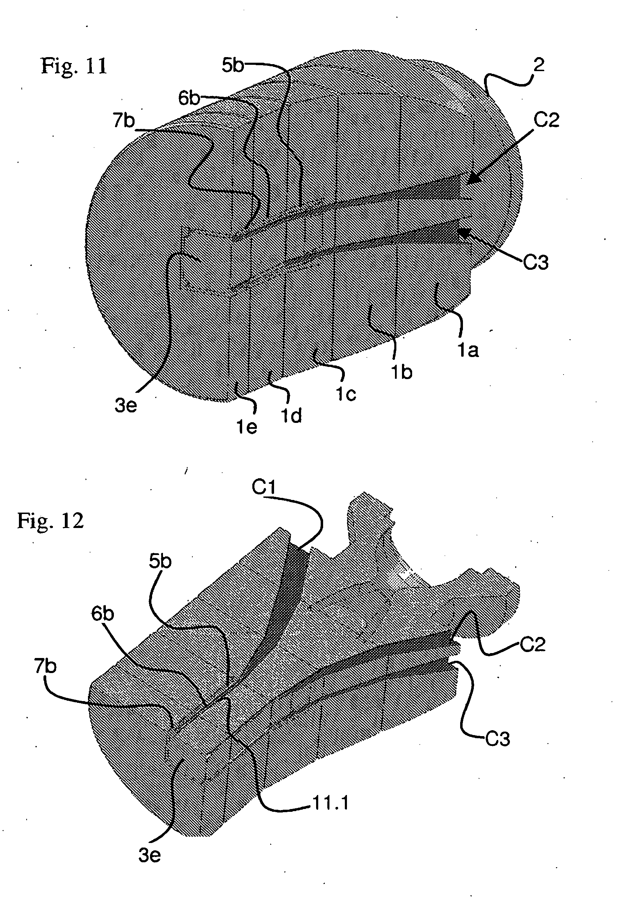

Les blocs 1 b, 1 c, 1 d situés en aval du bloc d'entrée 1a comportent des passages, partiellement visibles, pour la matière plastique, prévus pour donner progressivement la forme souhaitée au profilé. Sur la figure 4 seules sont visibles les amorces 4b, 4c de tels passages qui se prolongent dans un plan différent de celui de la figure 4 mais les figures 9 à 12 permettent de visualiser les tronçons réalisés dans les blocs 1 a, 1 b, 1c, 1 d et 1 e autorisant le passage distinct d'une part des joncs ou fibres de renfort et d'autre part de la matière plastique. A la sortie du bloc 1 c on peut voir le débouché 5b, 5c des passages pour la matière plastique. Dans le bloc 1d les passages 6b, 6c pour la matière plastique sont parallèles à, l'axe géométrique X-X de la tête. Ces passages sont prolongés par des passages 7b, 7c alignés dans le bloc de sortie 1 e. Un poinçon 3e se trouve au centre du bloc 1 e comme visible sur la figure 3. Dans l'exemple simple considéré, le contour du profilé est carré ou rectangulaire et le poinçon 3e correspond à la forme intérieure du profilé P1 mais bien entendu, on pourra prévoir que le poinçon 3e présente n'importe quelle forme choisie pour former le profilé désiré.

La tête d'extrusion T comporte des canaux C1, C2, C3, C4 pour l'insertion de joncs continus de renfort J1-J4, constituant des éléments de renforcement du profilé. Dans l'exemple considéré, quatre canaux d'insertion C1, C2, C3, C4 sont prévus. Il s'agit d'un exemple et le nombre de canaux d'insertion et de joncs de renfort peut être différent et choisi selon le type de profilé à réaliser.

Les canaux C1-C4 sont séparés, sur la majeure partie de leur trajet, des passages pour la matière plastique 2b, 4b, 5b, 6b, 7b et 2c, 4c, 5c, 6c, 7c, et ne débouchent dans les passages 7b, 7c du bloc de sortie que dans une zone 8b, 8c proche de la sortie (Fig.5 et 8).

La zone 8b, 8c est formée par un élargissement radial vers l'intérieur du passage 7b, 7c. Les canaux d'insertion C1-C4 débouchent dans les zones 8b, 8c suivant une direction parallèle à l'axe X-X de la tête.

Au niveau des zones 8b, 8c où les canaux C1-C4 débouchent, la pression de la matière plastique injectée est devenue suffisamment faible pour, qu'en l'absence de joncs J1, J2, la matière plastique ne s'infiltre pas dans les canaux C1, C2.

La description de la figure 4 (et des figures 9 à 12) concerne deux canaux C1, C2 et les joncs correspondants. Une description semblable s'applique aux autres canaux d'insertion pour les joncs correspondants.

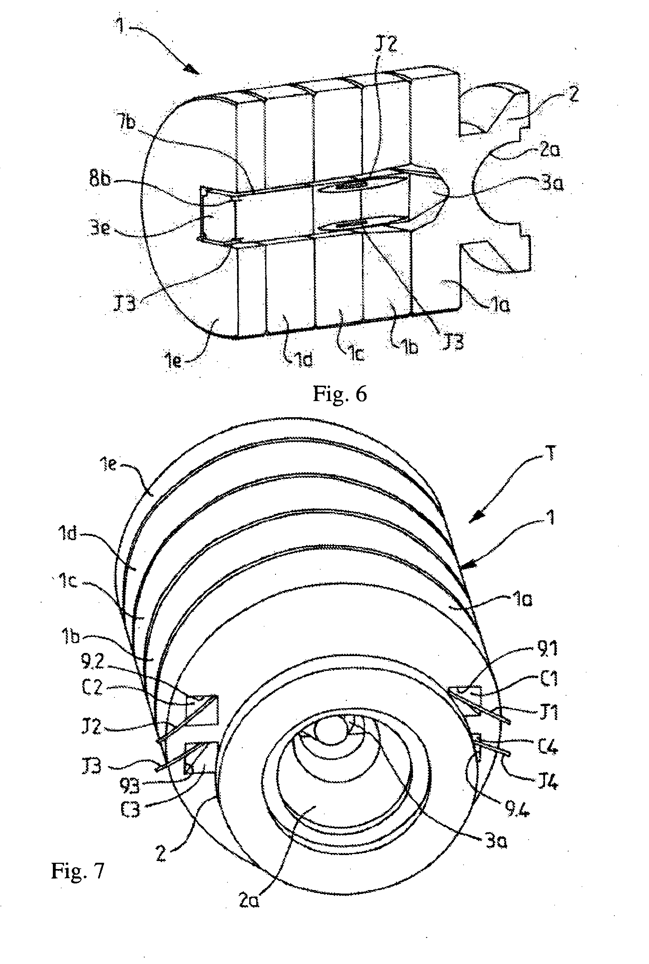

Les ouvertures d'entrée 9.1, 9.2, 9.3, 9.4 (Fig. 7) des canaux d'insertion sont situées radialement à l'extérieur de l'entrée 2a de la matière plastique et les canaux comportent une partie arrière 10.1, 10.2 (Fig. 4) inclinée vers l'axe géométrique X-X pour passer radialement à l'intérieur du contour du profilé au voisinage de la face avant du bloc 1c. Dans le bloc suivant 1d, ainsi que dans le bloc de sortie 1e, les canaux d'insertion C1-C4 sont situés radialement à l'intérieur du contour du profilé en matière plastique. La transition des canaux C1-C4 de l'extérieur à l'intérieur du contour du profilé est réalisée sans intersection avec les passages pour la matière plastique grâce à des décalages de plans. La partie arrière 10.1, 10.2 se compose de plusieurs sections situées dans les blocs 1a, 1b, 1c qui se raccordent et qui sont de moins en moins inclinés par rapport à l'axe géométrique X-X. La section transversale des canaux C1-C4 diminue progressivement de l'arrière vers l'avant.

L'entrée 9.1-9.4 des canaux peut avoir une forme rectangulaire, suffisamment grande pour faciliter l'introduction des joncs de renfort J1-J4. La partie 11.1-11.2 des canaux C1, C2 voisine de la sortie présente une section transversale, par exemple circulaire, adaptée à la section transversale des joncs J1-J4 à introduire.

Du fait que la matière plastique ne s'infiltre pas dans les parties 11.1, 11.2 d'extrémité des canaux C1, C2, il n'est pas nécessaire de réduire le plus possible le jeu radial entre le contour d'un jonc de renfort et le contour de la section de la zone 11.1, 11.2 correspondante. Ainsi, pour une section transversale des parties 11.1, 11.2 prévue pour un jonc de diamètre déterminé, il est possible d'introduire des joncs de plus petit diamètre, sans inconvénient, puisque la matière plastique ne refoule pas dans les canaux d'insertion.

De la sorte, une même tête d'extrusion peut servir à plusieurs diamètres de joncs de renfort, sans modification.

De préférence, les canaux C1-C4 débouchent dans les passages pour la matière plastique à une distance h (Fig. 4 et 5) de la sortie présentant le moins de pression exercée sur la matière plastique afin d'éviter le refoulement de la matière dans les dits canaux. La distance h entre les sorties des canaux C1-C4 et les passages de la matière plastique est comprise entre 5 millimètres et 10 millimètres (mm), de préférence entre 7 et 9 mm et idéalement de 8 mm.

Pour la fabrication d'un profilé en matière plastique, on procède comme suit.

La tête d'extrusion T est raccordée à une extrudeuse par sa partie 2. L'injection de matière thermoplastique est effectuée axialement selon la flèche F (Fig. 4) par l'entrée 2a de la tête T. La matière plastique s'écoule dans les passages prévus à cet effet.

Le début de la fabrication peut être effectué sans insertion de joncs J1-J4 de sorte qu'à l'extrémité du bloc de sortie 1e le profilé qui sort ne comporte pas de renforcements.

Lorsqu'un régime permanent de sortie du profilé s'est établi, on effectue l'insertion des joncs J1-J4 par la face arrière du bloc d'entrée 1a. Le début de l'insertion peut être manuel, puis les joncs sont entraînés par le profilé en matière plastique sortant de la tête d'extrusion.

L'insertion des joncs peut être interrompue, si on le souhaite, sans inconvénient car la matière plastique ne reflue pas dans les canaux C1-C4 vides de joncs et ne risque pas d'obstruer ces canaux. Il est possible d'arrêter la fabrication et de redémarrer sans problème, sans avoir à démonter les blocs, ni à procéder à un nettoyage.

Le nez de poinçon peut être démontable et permet, par son changement de modifier partiellement la forme du profilé à extruder ainsi que le diamètre des joncs et leur nombre.

L'invention procure de nombreux avantages :
- la mise en oeuvre de l'invention ne nécessite pas de modification de l'emplacement des extrudeuses et peut donc être facilement adaptée ;
- l'invention peut être adaptée à n'importe quelle forme de profilé réalisé par extrusion ;
- la phase de démarrage peut être effectuée de façon classique, avec un calibrage sans les joncs, et les joncs peuvent être insérés ensuite un à un dans un ordre indifférent ;
- il n'est pas nécessaire de pré-positionner les joncs dans la filière avant le démarrage ; ainsi, tout risque de ramollissement des joncs pouvant comporter une matrice en matière thermoplastique, ce qui empêcherait leur insertion dans la filière, est supprimé ;
- il est possible de couper un ou plusieurs joncs sans arrêter la production et de les replacer toujours en cours de production ;
- aucun bouchage des canaux d'insertion C1-C4 ne survient, que ce soit en phase de démarrage, d'arrêt ou en réglage ;
- le diamètre des joncs peut être modifié, dans une certaine limite, par simple changement du nez de poinçon ;
- aucun retrait du profilé n'est généré par l'insertion de joncs.

Le renforcement des profilés avec des joncs en fibres de verre permet de limiter la présence de métal à l'intérieur des profilés et d'éviter la création de ponts thermiques, tout en assurant une résistance mécanique comparable.

Il est possible d'effectuer une co-extrusion de mousse de matière plastique expansée, notamment de PVC, à l'intérieur du profilé.

## Revendications

1. Outillage d'extrusion pour la fabrication de profilés en matière plastique avec éléments de renforcement en une matière à haute résistance mécanique, notamment fibres de verre ou fibres de carbone, comprenant une filière avec un bloc d'entrée pour l'injection de la matière plastique, sous haute pression, dans des passages traversant des blocs successifs pour donner progressivement sa forme au profilé jusqu'à une ouverture de sortie au profil final, et un poinçon maintenu par des ailettes à l'intérieur des passages pour la matière plastique, comportant des canaux (C1-C4) pour l'insertion de joncs continus de renfort (J1-J4) constituant les éléments de renfort, outillage dans lequel:
- la transition des canaux (C1-C4) de l'extérieur à l'intérieur du contour du profilé est réalisée sans intersection avec les passages pour la matière plastique grâce à des décalages de plans,
- et ces canaux (C1-C4) sont séparés, sur au moins la majeure partie de leur trajet dans la filière, des passages (4b, 4c, 5b, 5c,...7b, 7c) pour la matière plastique, et ne débouchent dans ces passages que dans une zone (8b, 8c) proche de la sortie où la pression de la matière plastique injectée est devenue suffisamment faible pour, qu'en l'absence de joncs, la matière plastique ne s'infiltre pas dans les canaux, de sorte que cet outillage d'extrusion permet de passer d'une fabrication sans joncs de renfort à une fabrication avec joncs de renfort, et inversement, sans interruption.

2. Outillage selon la revendication 1, **caractérisé en ce que** les canaux (C1-C4) sont séparés des passages pour la matière plastique (4b, 4c, 5b, 5c ... 7b, 7c) sur toute la partie de leur trajet dans la filière.

3. Outillage d'extrusion selon la revendication 1, **caractérisé en ce que** les joncs de renfort (J1-J4) sont constitués de fibres en une matière à haute résistance mécanique, en particulier fibres de verre et/ou de carbone, maintenues dans une matrice.

4. Outillage d'extrusion selon l'une quelconque des revendications précédentes, **caractérisé en ce que** les ouvertures d'entrée (9.1- 9.4) des canaux d'insertion (C1-C4) de joncs continus de renfort sont situées sur la face arrière de l'outillage ou latéralement.

5. Outillage d'extrusion selon la revendication 4, **caractérisé en ce que** les ouvertures d'entrée (9.1- 9.4) des canaux d'insertion sont situées radialement à l'extérieur de l'orifice d'entrée de la matière plastique, et les canaux d'insertion comportent une partie arrière (10.1, 10.2) inclinée vers l'axe géométrique (X-X) de la tête pour passer radialement à l'intérieur du contour du profilé sans intersection avec les passages pour la matière plastique.

6. Outillage d'extrusion selon l'une quelconque des revendications précédentes, **caractérisé en ce que** les canaux d'insertion (C1, C2) dans leur partie avant (11.1, 11.2) sont sensiblement rectilignes et parallèles à l'axe géométrique de l'outillage d'extrusion.

7. Outillage d'extrusion selon l'une quelconque des revendications précédentes, **caractérisé en ce que** les canaux d'insertion débouchent dans une zone (8b, 8c) proche de la sortie formée par un élargissement radial vers l'intérieur des passages (7b, 7c) pour la matière plastique.

8. Outillage d'extrusion selon l'une quelconque des revendications précédentes, **caractérisé en ce que** les canaux d'insertion (C1-C4) débouchent dans une zone (8b, 8c) située à une distance (h) de la sortie présentant une faible compression de la matière extrudée afin d'éviter le refoulement de celle-ci dans les canaux

9. Outillage d'extrusion selon l'une quelconque des revendications précédentes, pour un profilé à contour polygonal, **caractérisé en ce que** les canaux d'insertion (C1-C4) débouchent à l'intérieur du contour polygonal.

10. Procédé de fabrication de profilés en matière plastique avec éléments de renforcement en une matière à haute résistance mécanique, notamment en fibres de verre ou fibres de carbone, mettant en oeuvre un outillage d'extrusion selon l'une quelconque des revendications précédentes, **caractérisé en ce que** :
- le début de fabrication est effectué sans insérer les joncs continus constituant les éléments de renforcement,
- et l'insertion des joncs (C1-C4) est réalisée lorsqu'un régime de sortie du profilé s'est établi.

11. Procédé selon la revendication 10, **caractérisé en ce que**, en cours de fabrication, l'insertion de joncs de renfort est arrêtée, puis reprise, sans interruption de l'extrusion de la matière plastique.

12. Procédé selon la revendication 10 ou 11, **caractérisé en ce que**, préalablement à l'insertion des joncs (C1-C4), on réalise un chauffage desdits joncs (C1-C4) à une température T comprise entre 220°C et 350°C, de préférence à une température T comprise entre 250°C et 290°C.

13. Procédé selon la revendication 12, **caractérisé en ce que** le chauffage des joncs (C1-C4) est réalisé sans contact, de préférence par passage desdits joncs (C1-C4) à proximité d'au moins une résistance, par exemple de type infra-rouge, présentant une longueur comprise entre 300 et 500 millimètres (mm), idéalement comprise entre 380 et 420 mm.

## Patentansprüche

1. Extrusionswerkzeug zur Herstellung von Profilen aus Kunststoff mit Verstärkungselementen aus einem Material mit großer mechanischer Widerstandsfähigkeit, insbesondere Glasfasern oder Karbonfasern, umfassend eine Einspritzdüse mit einem Eintrittsblock für die Einspritzung von Kunststoff bei hohem Druck in Durchgänge, die aufeinanderfolgende Blöcke durchqueren, um dem Profil allmählich seine Form bis zu einer Austrittsöffnung zum Endprofil zu geben, und einen Stempel, der durch Rippen im Inneren der Durchgänge für den Kunststoff gehalten ist, umfassend Kanäle (C1- C4) für die Einführung von durchgehenden Verstärkungsstäben (J1 - J4), die die Verstärkungselemente bilden, wobei in dem Werkzeug:
- der Übergang der Kanäle (C1- C4) von außen nach innen der Kontur des Profils ohne Kreuzung mit den Durchgängen für den Kunststoff, dank von Versetzungen der Ebenen hergestellt ist,
- und diese Kanäle (C1- C4) über mindestens den größten Teil ihres Weges in der Einspritzdüse von Durchgängen (4b, 34c, 5b, 5c, ... 7b, 7c) für den Kunststoff getrennt sind und nur in einer Zone (8b, 8c) in diese Durchgänge münden, die nahe dem Austritt liegt, an dem der Druck des eingespritzten Kunststoffs ausreichend schwach geworden ist, damit in Abwesenheit der Stäbe der Kunststoff nicht in die Kanäle eindringt, derart, dass dieses Extrusionswerkzeug ermöglicht, von einer Herstellung ohne Verstärkungsstäbe auf eine Herstellung mit Verstärkungsstäben und umgekehrt ohne Unterbrechung überzugehen.

2. Werkzeug nach Anspruch 1, **dadurch gekennzeichnet, dass** die Kanäle (C1- C4) durch Durchgänge für Kunststoff (4b, 4c, 5b, 5c ... 7b, 7c) über den gesamten Bereich ihres Weges in der Einspritzdüse getrennt sind.

3. Extrusionswerkzeug nach Anspruch 1, **dadurch gekennzeichnet, dass** die Verstärkungsstäbe (J1 - J4) aus Fasern aus einem Material mit hoher mechanischer Widerstandsfähigkeit, insbesondere aus Glasfasern und/oder Karbonfasern bestehen, die in einer Matrix gehalten sind.

4. Extrusionswerkzeug nach einem beliebigen der vorhergehenden Ansprüche, **dadurch gekennzeichnet, dass** die Eintrittsöffnungen (9.1 - 9.4) der Einführungskanäle (C1 - C4) für durchgehende Verstärkungsstäbe an der Rückfläche des Werkzeugs oder seitlich liegen.

5. Extrusionswerkzeug nach Anspruch 4, **dadurch gekennzeichnet, dass** die Eintrittsöffnungen (9.1 - 9.4) der Einführungskanäle radial außerhalb der Eintrittsöffnung des Kunststoffs liegen und die Einführungskanäle einen rückseitigen Bereich (10.1, 10.2) aufweisen, der zu der geometrischen Achse (X-X) des Kopfes geneigt ist, um radial ins Innere der Kontur des Profils ohne Kreuzung mit den Durchgängen für den Kunststoff hineinzugehen.

6. Extrusionswerkzeug nach einem beliebigen der vorhergehenden Ansprüche, **dadurch gekennzeichnet, dass** die Einführungskanäle (C1, C2) in ihrem vorderen Bereich (11.1, 11.2) im Wesentlichen geradlinig und parallel zur geometrischen Achse des Extrusionswerkzeugs liegen.

7. Extrusionswerkzeug nach einem beliebigen der vorhergehenden Ansprüche, **dadurch gekennzeichnet, dass** die Einführungskanäle in eine Zone (8b, 8c) münden, die nahe dem Austritt liegt, der durch eine radiale Verbreiterung ins Innere der Durchgänge (7b, 7c) für den Kunststoff gebildet ist.

8. Extrusionswerkzeug nach einem beliebigen der vorhergehenden Ansprüche, **dadurch gekennzeichnet, dass** die Einführungskanäle (C1-C4) in eine Zone (8b, 8c) münden, die mit einem Abstand (h) zum Austritt liegen und eine geringe Kompression des extrudierten Materials aufweist, um eine Verdrängung desselben in den Kanälen zu vermeiden.

9. Extrusionswerkzeug nach einem beliebigen der vorhergehenden Ansprüche für ein Profil mit polygonaler Kontur, **dadurch gekennzeichnet, dass** die Einführungskanäle (C1- C4) im Inneren der Kontur der polygonalen Kontur münden.

10. Verfahren zur Herstellung von Profilen aus Kunststoff mit Verstärkungselementen aus einem Material mit hoher mechanischer Widerstandsfähigkeit, insbesondere aus Glasfasern oder Karbonfasern, zum Betreiben eines Extrusionswerkzeugs nach einem beliebigen der vorhergehenden Ansprüche, **dadurch gekennzeichnet, dass**:
- der Beginn der Herstellung durchgeführt wird, ohne die durchgehenden Stäbe, die die Verstärkungselemente bilden, einzuführen,
- und die Einführung der Stäbe (J1-J4) realisiert wird, wenn der Ausgangsbetriebszustand des Profils hergestellt ist.

11. Verfahren nach Anspruch 10, **dadurch gekennzeichnet, dass** während der Herstellung die Einführung der Verstärkungsstäbe angehalten wird, dann wieder ohne Unterbrechung der Extrusion des Kunststoffs aufgenommen wird.

12. Verfahren nach Anspruch 10 oder 11, **dadurch gekennzeichnet, dass** vor der Einführung der Stäbe (C1 - C4) eine Aufheizung der Stäbe (C1-C4) auf eine Temperatur T zwischen 220°C und 350°C, vorzugsweise auf eine Temperatur T zwischen 250°C und 290°C vorgenommen wird.

13. Verfahren nach Anspruch 12, **dadurch gekennzeichnet, dass** die Aufheizung der Stäbe (C1 - C4) ohne Kontakt, vorzugsweise durch Vorbeiführen der Stäbe (C1- C4) in der Nähe mindestens eines Widerstands, beispielsweise vom Infrarottyp realisiert wird, der eine Länge zwischen 300 und 500 Millimetern (mm), idealerweise zwischen 380 und 420 mm aufweist.

## Claims

1. Extrusion tool for manufacturing profiles made of plastic material with reinforcing elements made of a material with high mechanical strength, especially glass fibres or carbon fibres, said tool comprising a die with a feed-end block for injecting the plastic material, under high pressure, into passages that pass through successive blocks in order to give the profile its shape progressively as far as an outlet aperture with the final outline, and a mandrel held by fins inside the passages for the plastic material, comprising ducts (C1-C4) for inserting continuous reinforcing beads (J1-J4) constituting the reinforcing elements, in which tool:
- the transition of the ducts (C1-C4) from the outside to the inside of the contour of the profile is brought about without intersecting with the passages for the plastic material, thanks to offset planes;
- and the said ducts (C1-C4) are separated, over at least the majority of their path within the die, from the passages (4b, 4c, 5b, 5c,...7b, 7c) for the plastic material, and open into the said passages only in a zone (8b, 8c) close to the outlet where the pressure of the plastic material injected has become sufficiently low for the plastic material to not filter, in the absence of beads, into the ducts, in such a way that the said extrusion tool makes it possible to change from manufacture without reinforcing beads to manufacture with reinforcing beads, and *vice versa,* without interruption.

2. Tool according to Claim 1, **characterised in that** the ducts (C1-C4) are separated from the passages (4b, 4c, 5b, 5c,...7b, 7c) for the plastic material over the whole of the part of their path within the die.

3. Extrusion tool according to Claim 1, **characterised in that** the reinforcing beads (J1-J4) are made up of fibres made of a material with high mechanical strength, in particular glass fibres and/or carbon fibres, which are held in a matrix.

4. Extrusion tool according to any of the preceding claims, **characterised in that** the feed-end apertures (9.1-9.4) of the ducts (C1-C4) for inserting continuous reinforcing beads are situated on the rear face of the tool or laterally.

5. Extrusion tool according to Claim 4, **characterised in that** the feed-end apertures (9.1-9.4) of the inserting ducts are situated radially outside the feed-end orifice for the plastic material, and the inserting ducts comprise a rear part (10.1, 10.2) which is inclined towards the geometrical axis (X-X) of the head in order to pass through radially inside the contour of the profile without intersecting with the passages for the plastic material.

6. Extrusion tool according to any of the preceding claims, **characterised in that**, in their front part (11.1, 11.2), the inserting ducts (C1, C2) are substantially straight and parallel to the geometrical axis of the extrusion tool.

7. Extrusion tool according to any of the preceding claims, **characterised in that** the inserting ducts open into a zone (8b, 8c) close to the outlet formed by a radial widening towards the inside of the passages (7b, 7c) for the plastic material.

8. Extrusion tool according to any of the preceding claims, **characterised in that** the inserting ducts (C1-C4) open into a zone (8b, 8c) situated at a distance (h) from the outlet having a low compression of the extruded material in order to avoid the forcing of the latter back into the ducts.

9. Extrusion tool according to any of the preceding claims, for a profile with a polygonal contour, **characterised in that** the inserting ducts (C1-C4) open inside the polygonal contour.

10. Method of manufacturing profiles made of plastic material with reinforcing elements made of a material with high mechanical strength, especially made of glass fibres or carbon fibres, using an extrusion tool according to any of the preceding claims, **characterised in that**:
- the start of manufacture is carried out without inserting the continuous beads constituting the reinforcing elements;
- and the insertion of the beads (C1-C4) is brought about when an outlet regime for the profile has established itself.

11. Method according to Claim 10, **characterised in that**, in the course of manufacture, the insertion of the reinforcing beads is stopped, and then resumed, without interrupting the extrusion of the plastic material.

12. Method according to Claim 10 or 11, **characterised in that**, prior to the insertion of the beads (C1-C4), heating of the said beads (C1-C4) is brought about at a temperature T of between 220°C and 350°C, preferably at a temperature T of between 250°C and 290°C.

13. Method according to Claim 12, **characterised in that** the heating of the beads (C1-C4) is brought about without contact, preferably by the passing of the said beads (C1-C4) close to at least one heating element, for example of the infrared type, having a length of between 300 and 500 millimetres (mm), and ideally of between 380 and 420 mm.
